# EUROPEAN PATENT SPECIFICATION

(11) **EP 4 167 734 B1**
(45) Date of publication and mention of the grant of the patent: **21.08.2024**
(21) Application number: 21759375.5
(22) Date of filing: 10.06.2021
(51) Int. Cl.: A01K 91/10

(54) **MAGNETIC TRIGGER DEVICE FOR PRETENSIONED FISHING LINE**
MAGNETISCHE ABZUGSVORRICHTUNG FÜR VORGESPANNTE ANGELSCHNUR
DISPOSITIF DE DÉCLENCHEMENT MAGNÉTIQUE POUR LIGNE DE PÊCHE PRÉCONTRAINTE

(30) Priority: 18.06.2020 HU 2000108 U; 12.05.2021 HU 2100088 U
(43) Date of publication of application: 26.04.2023
(73) Proprietor: Nieto, Ramon, 1055 Budapest (HU)
(72) Inventor: Nieto, Ramon, 1055 Budapest (HU)
(74) Representative: Mak, Andras
(86) International application number: PCT/HU2021/000009
(87) International publication number: WO 2021/255486

(56) References cited:
- DE-A1- 2 937 590
- US-A- 4 031 652
- US-A1- 2004 074 133
- US-A1- 2006 064 918

## Description

The subject of the invention is magnetic trigger device for fishing lines, which allows the easy use of pretensioned fishing methods and ensures a more environmentally friendly solution.

The breakup method is often used for catching predatory fish, such as catfish. This method includes tying the end tackle holding the primarily line to a pole, tree, bush, buoy, weights in the water, etc. located opposite to the fishing rod, with the help of a secondary line, which has a much smaller tensile strength than that of the primary line. Then the fishing rod is put down on the land in a tensioned condition. The fishing rod may be aligned vertically, so the primary line remains tensioned above the water all along its length. The secondary line breaks in case of a bite, and then the tiring of the fish can be started. The chance of catching (hooking) a fish is higher with this method relative to other methods such as fly fishing or ledgering, because there is a more direct link between the end tackle and the fishing rod.

US 2006/064918 A1 discloses a trigger device for pre-tensioned fishing line, which comprises rope element formed with a base body and connecting surface. The rope element and a line guiding element are attached with fastening surface. A drawback of the solution is that the fastening force is independent from the triggering state.

The Hungarian patent HU220410, having registration No. P9800936 makes known a fishing tackle for ledgering, which has a primary line connected to the base line, a self-feeding basket placed on the primary line and/or other weight, and the front piece connected to the primary line. It is characterised by a main line made of soft woven string consisting of flexible fibres, where elongated rigid support tube pairs are mounted on the main line at regular intervals, and a front piece is connected at least at one location between two support tubes with the help of a rotatable connecting member.

The disadvantage the solution described above and used in practice is that the low tensile strength line usually cannot be found after breaking, therefore a new line has to be used after each bite, and it is required to establish an appropriate tie again. Consequently the anglers leave many broken fishing lines behind at the bottom of the water together with the weights that facilitate the fastening of the fishing line.

Further disadvantages of these solutions include the difficulties of re-tying when the bite occurs in the dark, and as it takes a longer time the water is disturbed for a longer period and the fish are frightened away.

By developing the device according to the invention our aim was to create a fishing device, which can eliminate the break of the auxiliary line after a bite when using the breakup method, and that the main line and the auxiliary line can be connected quickly and easily.

When creating the device according to the invention we recognised that if the device is made from a rope storing element and a line guiding element in a way that the rope wound on the reels of the rope storing element is fixed by passing it through a knot-free clip attached to the body of the rope storing element, and a lighting cartridge is inserted in the longitudinal grooves of the rope storing element, while a rotating clip is placed into the line guiding element, and lighting cartridge is placed in its longitudinal grooves, and the rope storing element is fixed to the line guiding element with the help of magnets located on their connecting surfaces, then the set out aim can be reached.

The invention is directed to a magnetic trigger device for pretensioned fishing line according to independent claim 1.

The magnetic trigger device for pretensioned fishing line comprises:
a rope storing element formed with a base body, a cylindrical end and a connecting surface, as well as a truncated cone shaped line guiding element formed with a fastening surface, a cylindrical surface and a connecting surface, and reels are connected to side surfaces of the base body of the rope storing element, and supporting lugs are connected to the reels, while a knot-free clip is fixed to the base body at an upper end of the base body.

According to the invention a magnet is located at the centre of the circular connecting surface of the rope storing element, and a rotating clip is fixed at the centre of the fastening surface of the line guiding element, while a counter magnet is located at the centre of the circular connecting surface of the line guiding element.

Preferred embodiments of the invention are described in the attached claims 2-8.

The device according to the invention is introduced with reference to the following figures:
Fig. 1 shows the perspective view of a possible embodiment of the device according to the invention.
Fig. 2 shows the side view of the trigger device introduced in Fig. 1.
Fig. 3 shows the perspective view of the rope storing element of the trigger device introduced in Fig. 1.
Fig. 4 shows the perspective view of the line guiding element of the trigger device introduced in Fig. 1.
Fig. 5 is another possible embodiment of the trigger device shown in perspective view.
Fig. 6 shows the perspective view of the trigger device introduced in Fig. 5 without the lighting cartridges.
Fig. 7 shows the side view of the trigger device introduced in Fig. 5.
Fig. 8 shows the perspective view of the rope storing element introduced in Fig. 5.
Fig. 9 shows the perspective view of the line guiding element introduced in Fig. 5.
Fig. 10 shows the rope storing element introduced in Fig. 5 as seen from the direction of its connecting surface.
Fig. 11 shows the line guiding element introduced in Fig. 5 from the direction of its connecting surface.
Fig. 12 shows a possible application of the trigger device according to the invention during use in pretensioned condition.
Fig. 13 shows a possible application of the trigger device according to the invention during use and in triggered status.

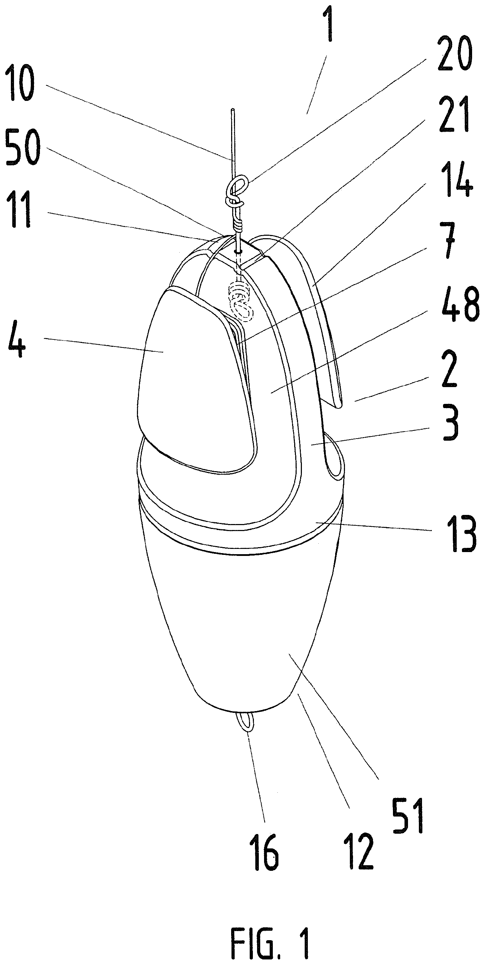

Fig. 1 shows the perspective view of a possible embodiment of the device according to the invention. The rope storing element 2 and the line guiding element 12 of the trigger device 1 can be seen in the figure. Grooves 11, 21 are formed at the upper end 50 of the base body 3 of the rope storing element 2, and a knot-free clip 20 is fixed in the base body 3 at the part between the grooves 11, 21. The rope 10 is wound on the reel 7, which is connected to the side surface 48 of the base body 3, and in this case it is guided in the groove 11 and wound on the knot-free clip 20. The supporting lugs 4, 14 of the rope storing element 2 are also shown. The base body 3 of the rope storing element 2 is terminated in a cylindrical end 13 formation. The figure also shows the line guiding element 12 formed with cylindrical surface 51 and having a truncated cone shape, as well as a rotating clip 16.

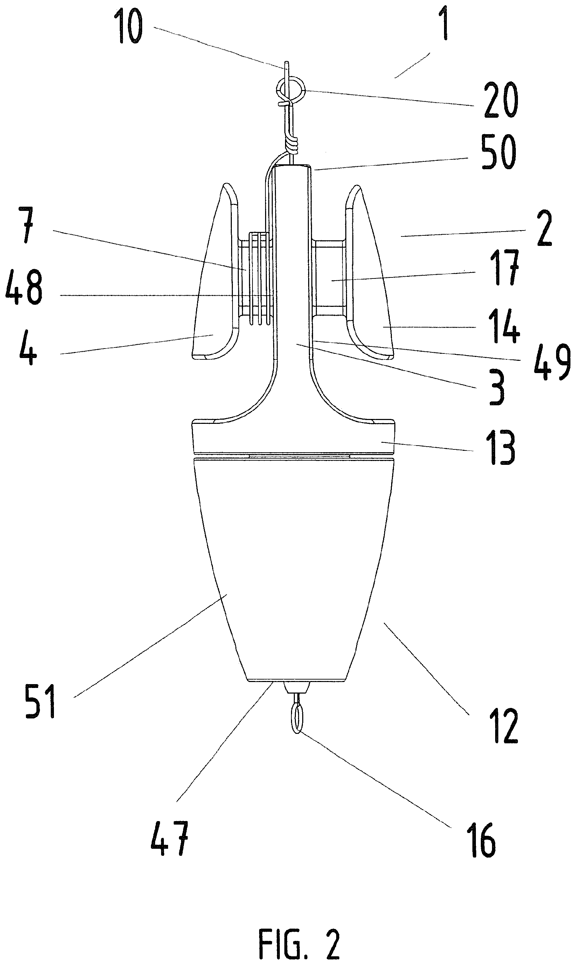

Fig. 2 shows the side view of the trigger device introduced in Fig. 1.

The rope storing element 2 and the line guiding element 12 of the trigger device 1 can be seen in the figure. The knot-free clip 20 is fixed in the base body 3 at the upper end 50 of the based body 3 of the rope storing element 2. The rope 10 is wound on the reel 7, which is connected to the side surface 48 of the base body 3, which is passed further and wound on the knot-free clip, and there is a reel 17, which is connected to the side surface 49 of the base body 3.

The supporting lugs 4, 14 of the rope storing element 2 can be seen here. The base body 3 of the rope storing element 2 is terminated in a cylindrical end 13. Further components that can be seen in the figure are the line guiding element 12 formed with cylindrical surface 51 and having a truncated cone shape, as well as with the rotating clip 16.

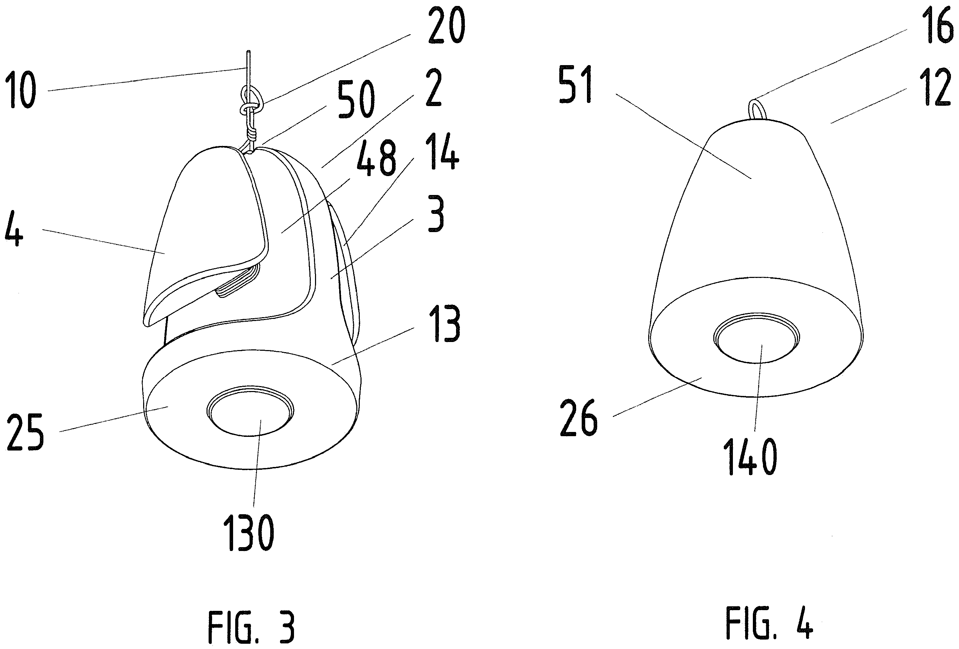

Fig. 3 shows the perspective view of the rope storing element 2 of the trigger device 1 introduced in Fig. 1. The rope storing element 2 of the trigger device 1 can be seen in the figure. A knot-free clip 20 is fastened in the upper end 50 of the base body 3 of the rope storing element 2. A reel 7 is connected to the side surface 48 of the base body 3, and a rope 10 is wound on the reel 7. A rope 10 is passed forward while wound around the knot-free clip 20.

The supporting lugs 4, 14 of the rope storing element 2 can be seen on the figure. The base body 3 of the rope storing element 2 is terminated in cylindrical end 13 with its circular connecting surface 25, to the centre of which connecting surface 25 a magnet 130 is attached.

Fig. 4 shows the perspective view of the line guiding element of the trigger device introduced in Fig. 1. The components that can be seen in the figure are the line guiding element 12 formed with the truncated cone shaped cylindrical surface 51 together with the rotating clip 16, which is attached to the fastening surface 47 of the line guiding element 12. The figure shows the circular connecting surface 26, and a counter magnet 140 is fixed at the centre of the connecting surface 26.

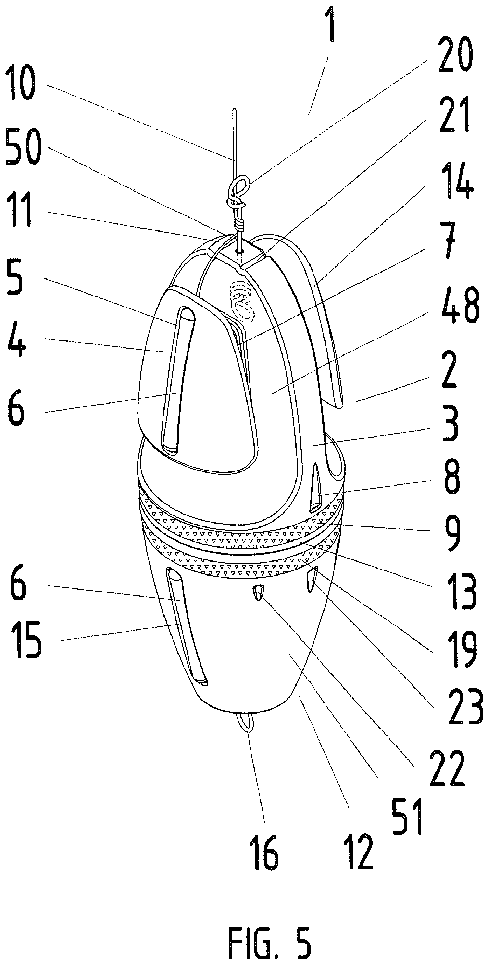

Another possible embodiment of the trigger device is shown in Fig. 5 in perspective view. The figure shows the rope storing element 2 and the line guiding element 12 of the trigger device 1. Grooves 11, 21 are formed at the upper end 50 of the base body 3 of the rope storing element 2, and the knot-free clip 20 is fixed in the base body 3 at the part between the grooves 11, 21. The rope 10 is would on the reel 7, which is attached to the side surface 48 of the base body 3, and it is guided in the groove 11 and it is wound on the knot-free clip 20 in this case.

The supporting lugs 4, 14 of the rope storing element 2 can be seen on the figure together with the lighting cartridge 6 located in the longitudinal groove 5 of the supporting lug 4. The base body 3 of the rope storing element 2 is terminated in the cylindrical end 13, on the external surface of which the reflecting surface 9 is mounted. An indicating rib 8 is formed on the base body 3. The figure furthermore shows line guiding element 12 having a truncated cone shape and cylindrical surface 51, and there is a rotating clip 16, a reflecting surface 19, first and second strength indicating ribs 22 and 23, and lighting cartridge 6 placed in the longitudinal groove 15.

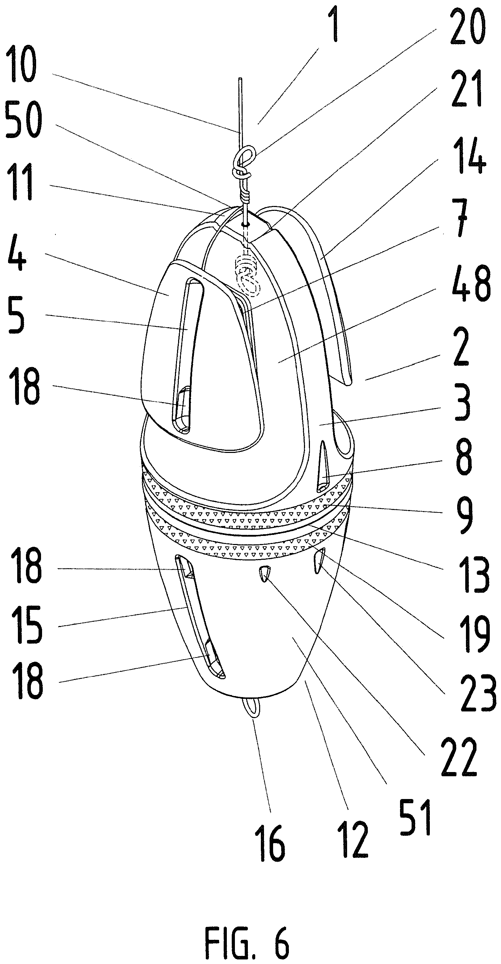

Fig. 6 shows the perspective view of the trigger device introduced in Fig. 5 without the lighting cartridges. The figure shows the rope storing element 2 and the fishing line guiding element 12 of the trigger device 1. Grooves 11, 12 are formed at the upper end 50 of the base body 3 of the rope storing element 2, and the knot-free clip 20 is fixed between the grooves 11, 12. The rope 10 is wound on the reel 7, which is connected to the side surface 48 of the base body 3, which in this case is guided in the groove 11 and wound on the knot-free clip 20.

The supporting lugs 4, 14 of the rope storing element 2 can be seen here together with the longitudinal groove 5 of the supporting lug 4. In addition to the longitudinal groove 5 a recess 18 is formed in the cylindrical end 13. The base body 3 of the rope storing element 2 is terminated with the cylindrical end 13, on the external surface of which a reflecting surface 9 is attached. An indicating rib 8 is formed on the base body 3.

Further components shown in the figure are the line guiding element 12 having truncated cone shape and formed with cylindrical surface 51, together with the rotating clip 16, the reflecting surface 19, the first and second strength indicating ribs 22 and 23 and its longitudinal groove 15 which is formed in the line guiding element 12, and recesses 18 are established at the two ends of the longitudinal groove 15.

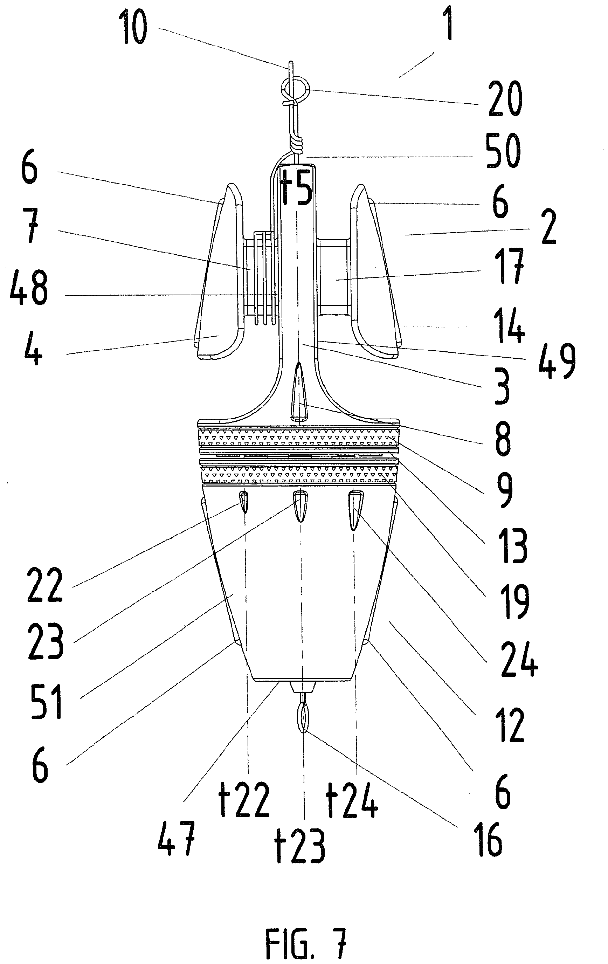

Fig. 7 shows the side view of the trigger device introduced in Fig. 5. The rope storing element 2 and the fishing line guide element 12 of the trigger device can be seen in the figure. A knot-free clip 20 is fixed at the upper end 50 of the base body 3 of the rope storing element 2. A reel 7 is connected to the side surface 48 of the base body 3, and the rope 10 is wound on the reel 7. The rope 10 is passed further on while wound on the knot-free clip 20. The support lugs 4, 14 with the lighting cartridges 6 are connected to the reels 7, 17 of the rope storing element 2. The base body 3 of the rope storing element 2 is terminated with the cylindrical end 13, on the surface of which a reflecting surface 9 is attached, and an indicating rib 8 is formed with axis t5 on the base body 3. A line guiding element 12 having a truncated cone shape and formed with cylindrical surface 51 is shown in the figure together with the rotating clip 16 which is fixed to the fastening surface 47 of the line guiding element 12. The figure also shows the reflecting surface 19 fixed to the cylindrical surface 51, as well as the first strength indicating rib 22 with axis t22 on the cylindrical surface 51, and the second strength indicating rib 23 with axis t23, and the third strength indicating rib 24 with axis t24, as well as the lighting cartridges 6.

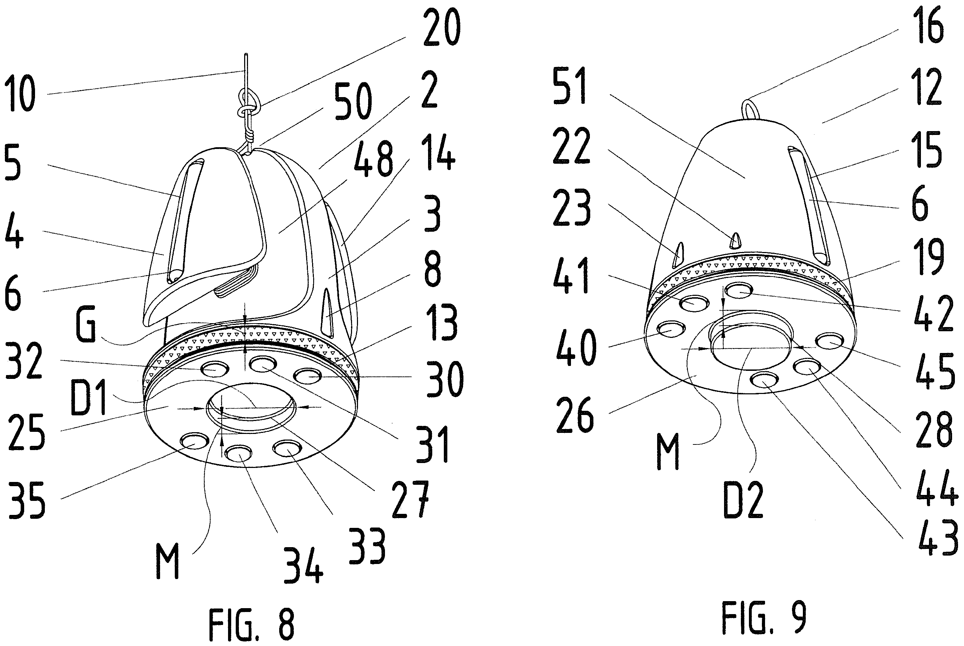

Fig. 8 shows the perspective view of the rope storing element 2 introduced in Fig. 5.

The base body 3 of the rope storing element 2 can be seen in the figure together with its cylindrical end 13 having a height G, and its connecting surface 25. The components shown in the figure include the knot-free clip 20 fixed at the upper end 50 of the base body, the rope 10, the side surface 48, the supporting lug 4, 14, and the lighting cartridge 6 located in the longitudinal groove 5 of the supporting lug 4. The base body 3 of the rope storing element 2 is terminated in a cylindrical end 13, on the external surface of which the reflecting surface 9 is attached. An indicting rib 8 with axis t5 is formed on the base body 3. Magnets 30, 31, 32, 33, 34, 35 are fixed on the connecting surface 25, and a circular groove 27 having a depth M and a diameter DI is formed in the cylindrical end 13.

Fig. 9 shows the perspective view of the line guiding element 12 introduced in Fig. 5. The items shown in the figure include the fishing line guiding element 12, which has a truncated cone shape, the rotating clip 16, the reflecting surface 19, the first and second strength indicating ribs 22 and 23, and the lighting cartridge 6 placed in the longitudinal groove 15. The connecting surface 26 can be seen here together with the cylindrical connecting element 28 having a height M and a diameter D2, and the opposite pole magnets 40,41,42,43,44,45.

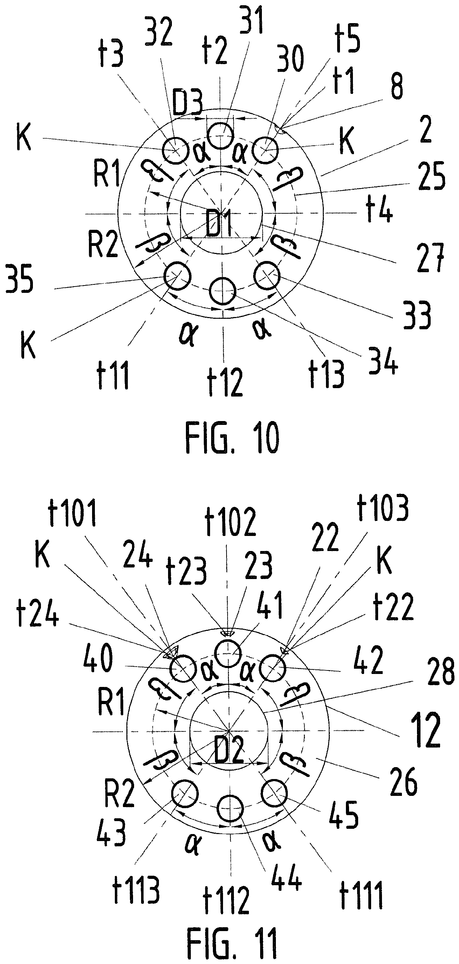

Fig. 10 shows the rope storing element introduced in Fig. 5 as seen from the direction of its connecting surface. The components shown in the figure include the rope storing element 2 having a circular connecting surface 25 with a radius R2, the circular groove 27, and the indicating rib 8 having an axis t5. Magnets 30, 31, 32, 33, 34, 35 with a diameter D3 are attached to the connecting surface 25, the centres K of which are located on a circular arch having a radius R1, where R2 is larger than R1.

The centre K of the first magnet 30 is located on axis tl, the centre K of the second magnet 31 is located on axis t2, the centre K of the third magnet 32 is located on axis t3, the centre K of fourth magnet 33 is located on axis t13, the centre K of the fifth magnet 34 is located on axis t12, and the centre K of the sixth magnet 35 is located on axis t11. As can be seen in the figure the axes t1 and t11 are in line, as well as axes t2 and t12 are in line, and axes t3 and t 13 are in line.

There is an angle α between axes t1 and t2, as well as between axes t2 and t3, between axes t11 and t12, and between axes t12 and t13. Axis t2 is perpendicular to axis t4. There is an angle β between axes t4 and t1, as well as between axes t4 and t3, between axes t4 and t11, and between axes t4 and t13. As can be seen in the figure the indicating rib 8 with axis t5 and the centre K of the first magnet 30 are in the plane formed by axis t5 and axis t1.

Fig. 11 shows the line guiding element 12 introduced in Fig. 5 from the direction of its connecting surface. The components that can be seen in the figure include the line guiding element 12 together with its circular connecting element 26 having a radius R2, with its circular connecting element 28 having a diameter D2, and the strength indicating rib 22 with axis t22, strength indicating rib 23 with axis t23, and strength indicating rib 24 with axis t24.

Magnets 40, 41, 42, 43, 44, 45 having diameter D3 are mounted on the connecting surface 26, the centres K of which are located on the circular arch with radius R1. The centre K of the first opposite pole magnet 40 is located on the axis t101, the centre K of the second opposite pole magnet 41 is located on the axis t102, the centre K of the third opposite pole magnet 42 is located on the axis t103, the centre K of the fourth opposite pole magnet 43 is located on the axis t113, the centre K of the fifth opposite pole magnet 44 is located on the axis t112, and the centre K of the sixth opposite pole magnet 45 is located on the axis t111. As can be seen in the figure the axes t101 and t111 are in line, as well as axes t102 and t112 are in line, and axes t103 and t113 are in line. There is an angle u between axes t101 and t102, as well as between axes t102 and t103, between axes t111 and t112, between axes t112 and t112. Axes t102 and t104 are perpendicular to each other.

There is an angle β between axes t104 and 1101, as well as between axes t104 and 1103, between axes 1104 and t 111, between axes t104 and t113. The first strength indicating rib 22 with axis t22 and the centre K of the third opposite pole magnet 42 are in the plane determined by the axis t22 and axis t103. The second strength indicating rib 23 with axis t23 and the centre K of the second opposite pole magnet 41 are in the plane determined by the axis t23 and the axis 1102. The third strength indicating rib 24 with axis t24 and the centre K of the first opposite pole magnet 40 are in the plane determined by the axis t24 and the axis t101.

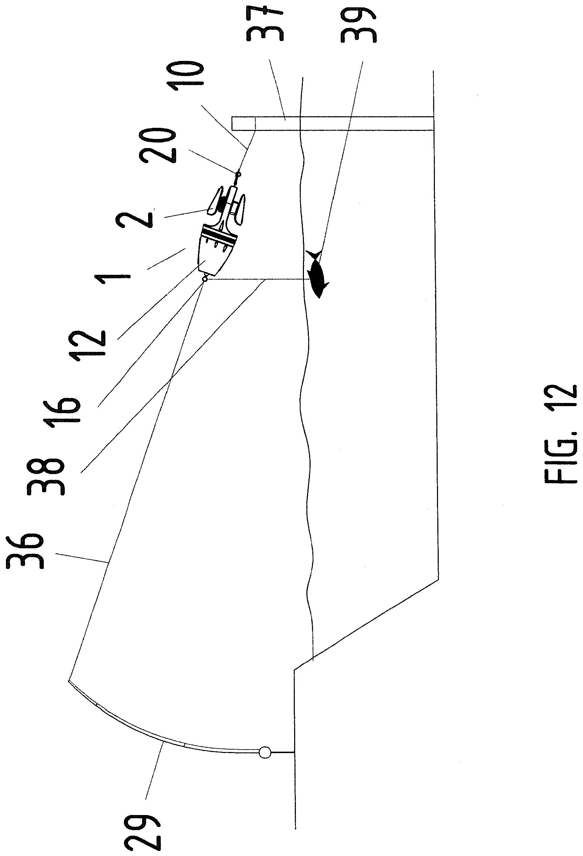

Fig. 12 shows a possible application of the trigger device 1 according to the invention during use in pretensioned condition. The trigger device can be seen in the figure with its rope storing element 2 and line guiding element 12. The fishing rod 29 placed on the land is in tensioned condition with fishing line 36. The fishing line 36 is fixed to the rotating clip 16 of the line guiding element 12 of the trigger device 1. The rope 10 can also be seen here, which is placed on the rope storing element 2, and is fastened to and also passed through the knot-free clip 20. The other end of the rope 10 is fixed to the pole 37 in this case. A fishing line 38 is fixed to the rotating clip 16, and a lure 39 is attached to the other end of the line.

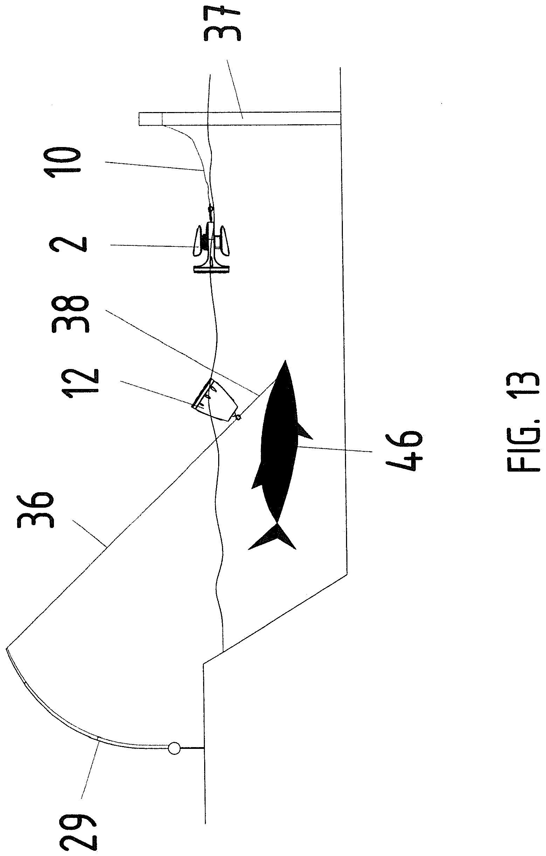

Fig. 13 shows a possible application of the trigger device according to the invention during use and in triggered status. Shown in the figure are the fishing rod 29 positioned on the land with the fishing line 36, as well as the line guiding element 12 with the fishing line 38 and the predatory fish 46. The rope storing element 2 together with the rope 10 can also be seen, where then other end of the rope is fixed to the pole 37 in this case. The rope storing element 2 floats on the water.

In case of a possible embodiment of the trigger device 1 according to the invention the rope storing element 2 is established first.

The rope storing element 2 is created as a single component, so that its base body 3 is terminated in a cylindrical end 13 having a height G and a radius R1, where the cylindrical end 13 is formed with a connecting surface 25 having a radius R1.

Grooves 11, 21 are formed in the upper end 50 of the base body, and the knot-free clip 20 is fixed between the groves 11, 20 at the upper end 50 of the base body 3. The reel 7 is attached to the side surface 48 of the base body 3, while the reel 17 is attached to the side surface 49 of the base body 3. The longitudinal groove 5 is formed with recess 18 in connection with reel 7, in which the lighting cartridge 6 is placed. The longitudinal groove 5 if formed with recess 18 in connection with reel 17, in which the lighting cartridge 6 is placed.

The reflecting surface 9 is fixed on the surface of cylindrical end 13 having a height G.

Furthermore, the indicating rib 8 with axis t5 is formed on the base body 3.

The magnets 30, 31, 32, 33, 34, 35 are fixed on the connecting surface 25, and a circular groove 27 with a depth M and a diameter D1 is formed in the cylindrical end 13.

Finally, the rope 10 is wound on one of the reels 7, 17 and then the rope 10 is laid in one of the grooves 11, and it is wound on the knot-free clip 20 so that sufficient length of the rope would extend beyond the knot-free clip 20.

Then the fishing line guiding element 12 is established.

The line guiding element 12 is formed as a single component, so that the fishing line guiding element 12 has a truncated cone shape with the cylindrical surface 51, a fastening surface 47 and a connecting surface 26.

The rotating clip 16 is placed into the fastening surface 47 of the line guiding element 12, and the reflecting surface 19 is fixed on the cylindrical surface 51. First, second and third strength indicating ribs 22, 23 and 24 are formed on the cylindrical surface 51.

Two longitudinal grooves 15 are established in the line guiding element 12, with recesses 18 at the two ends of the longitudinal groove 15, and lighting cartridges 6 are placed in the longitudinal grooves 15. Magnets 40, 41, 42, 43, 44, 45 are fixed on the connecting surface 26 together with the circular connecting element 28 having a height M and a diameter D2.

Then the rope storing element 2 and the line guiding element 12 are fitted to each other. This is made by inserting the connecting element 28 of the line guiding element 12 into the circular groove 27 of the rope storing element 2, so that the connecting surface 25 of the rope storing element 2 and the connecting surface 26 of the line guiding element 12 touch each other, and all or parts of the magnets 30, 31, 32, 33, 34, 35 on the connecting surface 25 of the rope storing element 2 touch the opposite pole magnets 40, 41, 42, 43, 44, 45 on the connecting surface 26 of the line guiding element 12.

Then the strength of the magnetic force is adjusted that holds together the rope storing element 2 and the line guiding element 12. This is accomplished by holding the line guiding element 12 stationary, while starting to rotate the rope storing element 2 with its connecting surface 25 on the fastening surface 26 of the line guiding element 12. If the indicating rib 8 on the rope storing element 2 is aligned to the strength indicting rib 22 of the line guiding element 12, i.e. the axes t5 and t22 coincide, then the magnet 30 is aligned to opposite pole magnet 42, and the magnet 35 is aligned to opposite pole magnet 43, and they exert a lower force to hold together the rope storing element 2 and the line guiding element 12.

If the indicating rib 8 on the rope storing element 2 is aligned to the strength indicting rib 23 of the line guiding element 12, i.e. the axes t5 and t23 coincide, then the first magnet 30 is aligned to the second opposite pole magnet 41, and the second magnet 31 is aligned to third opposite pole magnet 42, the third magnet 34 is aligned to fourth opposite pole magnet 43, fourth the magnet 35 is aligned to fifth opposite pole magnet 44, and they exert a stronger force to hold together the rope storing element 2 and the line guiding element 12.

If the indicating rib 8 on the rope storing element 2 is aligned to the strength indicting rib 24 of the line guiding element 12, i.e. the axes t5 and t24 coincide, then the first magnet 30 is aligned to first opposite pole magnet 40, and the second magnet 31 is aligned to second opposite pole magnet 41, the third magnet 32 is aligned to third opposite pole magnet 42, the fourth magnet 33 is aligned to fourth opposite pole magnet 43, the fifth magnet 34 is aligned to fifth opposite pole magnet 44, the sixth magnet 35 is aligned to sixth opposite pole magnet 45.

In case of a possible embodiment of the trigger device according to the invention the fishing rod 29 located on the land. and it is tensioned with the fishing line 36. The end of the fishing line 36 is tied to the rotating clip 16 of the line guiding element 12 of the trigger device 1. Then the end of rope 10 placed on the rope storing element 2, which rope 10 is fastened to and passed through the knot-free clip 20, is fastened to the pole 37 in this case.

The fishing line 38 is fastened to the rotating clip 16 of the line guiding element 12, to the other end of which the lure 39 is attached in the water.

In case the fish bites the movement of the fish causes the separation of the rope storing element 2 and the line guiding element 12 of the trigger device 1, and the rope storing element 2 together with the rope 10 floats on the water surface. After catching a predatory fish, the angler may assemble the trigger device 1 and the fishing rod with the fishing line 36, and can start the breakup fishing again.

Diameter D1 of the circular groove 27 is slightly larger than diameter D2 of the connecting element 28 by about 1-2 mm in order to allow an easy insertion of the connecting element 29 into the circular groove 27. The material of the rope storing element 2 and the line guiding element 12 of the trigger device 1 is epoxy foam, polyurethane foam, moulded ABS, ASA, PC, PA, etc.

The advantage of the device according to the invention is that it is possible to eliminate the need for breakup line entirely. Its use does not require long procedures, it can be assembled quickly and easily. When using the device, the anglers would not leave fishing lines, sinkers or spikes behind in the water.

### List of references:

- 1 -: trigger device
- 2 -: rope storing element
- 3: -base body
- 4 -: supporting lug
- 5 -: longitudinal groove
- 6 -: lighting cartridge
- 7 -: reel
- 8 -: indicating rib
- 9 -: reflecting surface
- 10 -: rope
- 11 -: groove
- 12 -: line guiding element
- 13 -: cylindrical end
- 14 -: supporting lug
- 15 -: longitudinal groove
- 16 -: rotating clip
- 17 -: reel
- 18 -: recess
- 19 -: reflecting surface
- 20 -: knot-free clip
- 21 -: groove
- 22 -: strength indicating rib
- 23 -: strength indicating rib
- 24 -: strength indicating rib
- 25 -: connecting surface
- 26 -: connecting surface
- 27 -: circular groove
- 28 -: connecting element
- 29 -: fishing rod
- 30-35: -magnet
- 36 -: fishing line
- 37 -: pole
- 38 -: fishing line
- 39 -: lure
- 40-45 -: counter pole magnet
- 46 -: predatory fish
- 47 -: fastening surface
- 48 -: side surface
- 49 -: side surface
- 50 -: upper end
- 51 -: cylindrical surface
- 130 -: magnet
- 140 -: counter magnet

## Claims

1. Magnetic trigger device (1) for pretensioned fishing line, which comprises:
a rope storing element (2) formed with a base body (3), a cylindrical end (13) and a connecting surface (25), as well as a truncated cone shaped line guiding element (12) formed with a fastening surface (47), a cylindrical surface (51) and a connecting surface (26), and reels (7, 17) are connected to side surfaces (48, 49) of the base body (3) of the rope storing element (2), wherein supporting lugs (4, 14) are connected to the reels (7, 17), while a knot-free clip (20) is fixed to the base body (3) at an upper end (50) of the base body (3),
**characterized in that,** a magnet (130) is located at the centre of the circular connecting surface (25) of the rope storing element (2),
and a rotating clip (16) for guiding the fishing line is fixed at the centre of the fastening surface (47) of the line guiding element (12), while a counter magnet (140) is located at the centre of the circular connecting surface (26) of the line guiding element (12).

2. Magnetic trigger device according to claim 1, **characterised in that** an indicating rib (8) is attached to the base body (3) with axis t5, and a circular groove (27) with diameter D1 and depth M is formed in the circular connecting surface (25) of the rope storing element (2) with radius R2, while magnets (30, 31, 32, 33, 34, 35) having diameter D3 are fixed on the connecting surface (25),
the centres K of which magnets (30, 31, 32, 33, 34, 35) are located on a circular arch with radius R1, and furthermore, the centre K of a first magnet (30) is located on axis t1, the centre K of a second magnet (31) is located on axis t2, the centre K of a third magnet (32) is located on axis t3, the centre K of a fourth magnet (33) is located on axis tl2, the centre K of a fifth magnet (34) is located on axis t13, the centre K of a sixth magnet (35) is located on axis t11, so that axes t1 and t11 are in line, axes t2 and t12 are in line, axes t3 and t13 are in line, while there is an angle α between axes t1 and t2, between axes t2 and t3, between axes t11 and t12, between axes t2 and t13, and furthermore, axis t2 is perpendicular to axis t4, while there is an angle β between axes 114 and t1, between axes t4 and t3, between axes t4 and t11, between axes t4 and t13, where angle α is less than angle β,
while the indicating rib (8) with axis t5 and the magnet (30) having centre K are in the plane determined by axis t1 and axis t5, and wherein there are a first strength indicating rib (22) with axis t22, and a second strength indicating rib (23) with axis t23, and a third strength indicating rib (24) with axis t24 fixed on the cylindrical surface (51) of the line guiding element (12), and a cylindrical connecting element (28) having diameter D2 and height M is fixed on the connecting surface (26) of the line guiding element (12) having radius R2, and opposite pole magnets (40, 41, 42, 43, 44, 45) having diameter D3 are fixed on the circular connecting surface (26) of the line guiding element (12) having radius R1, the centres K of which opposite pole magnets (40, 41, 42, 43, 44, 45) are located on a circular arch having radius R1, and centre K of a first opposite pole magnet (40) is on axis t101, centre K of a second opposite pole magnet (41) is on axis t102, centre K of a third opposite pole magnet (42) is on axis t103, centre K of a fourth opposite pole magnet (43) is on axis t113, centre K of a fifth opposite pole magnet (44) is on axis t112, centre K of a sixth opposite pole magnet (45) is on axis t111,
while axes t101 and t111 are in line, axes 1102 and t112 are in line, axes 1103 and t113 are in line, where there is an angle α between axes t101 and t102, between axes t102 and t103, between axes t111 and t112, between axes 1112 and 1113, while axis 1102 is perpendicular to axis t104,
while there is an angle β between axes t104 and t101, between axes t104 and t103, between axes t104 and t111, between axes t104 and t113, where angle α is less than angle β,
and furthermore, the first strength indicating rib (22) with axis t22 and the third opposite pole magnet (42) having centre K are located in the plane determined by axis t22 and axis t103,
the second strength indicating rib (23) with axis t23 and the second opposite pole magnet (41) having centre K are located in the plane determined by axis t23 and axis 1102,
the third strength indicating rib (24) with axis t24 and the first opposite pole magnet (40) having centre K are located in the plane determined by axis t24 and axis t101.

3. Magnetic trigger device according to any of the claims 1-2, **characterised in that** grooves (11, 21) are formed next to the knot-free clip (20) at the upper end (50) of the base body (3).

4. Magnetic trigger device according to any of the claims 1-3, **characterised in that** longitudinal grooves (5) with recess (18) are formed in the supporting lugs (4, 14), and lighting cartridges (6) are placed in the longitudinal grooves (5).

5. Magnetic trigger device according to any of the claims 1-4, **characterised in that** a reflecting surface (9) is fixed to the cylindrical end (13) of the rope storing element (2).

6. Magnetic trigger device according to any of the claims 1-5, **characterised in that** rope (10) is wound on one of the reels (7) of the rope storing element (2) and on its knot-free clip (20).

7. Magnetic trigger device according to any of the claims 1-6, **characterised in that** longitudinal grooves (5) each with two recesses (18) are formed in the cylindrical surface (51) of the line guiding element (12), and lighting cartridges (6) are placed in the longitudinal grooves (5).

8. Magnetic trigger device according to any of the claims 1-7, **characterised in that** a reflecting surface (19) is fixed to the cylindrical surface (51) of the line guiding element (12).

## Patentansprüche

1. Magnetische Auslösevorrichtung (1) für eine vorgespannte Angelschnur, die Folgendes umfasst:
ein Seilspeicherelement (2), das mit einem Grundkörper (3), einem zylindrischen Ende (13) und einer Verbindungsfläche (25) ausgebildet ist, sowie ein kegelstumpfförmiges Schnurführungselement (12), das mit einer Befestigungsfläche (47), einer zylindrischen Fläche (51) und einer Verbindungsfläche (26) ausgebildet ist, und wobei Spulen (7, 17) mit Seitenflächen (48, 49) des Grundkörpers (3) des Seilspeicherelements (2) verbunden sind, wobei
Haltelaschen (4, 14) mit den Spulen (7, 17) verbunden sind, während eine knotenfreie Klemme (20) an dem Grundkörper (3) an einem oberen Ende (50) des Grundkörpers (3) fixiert ist,
**dadurch gekennzeichnet, dass** sich ein Magnet (130) in der Mitte der kreisförmigen Verbindungsfläche (25) des Seilspeicherelements (2) befindet,
und eine sich drehende Klemme (16) zum Führen der Angelschnur in der Mitte der Befestigungsfläche (47) des Schnurführungselements (12) fixiert ist,
während sich ein Gegenmagnet (140) in der Mitte der kreisförmigen Verbindungsfläche (26) des Schnurführungselements (12) befindet.

2. Magnetische Auslösevorrichtung nach Anspruch 1, **dadurch gekennzeichnet, dass** eine Anzeigerippe (8) an dem Grundkörper (3) mit einer Achse t5 angebracht ist und eine kreisförmige Nut (27) mit einem Durchmesser D1 und einer Tiefe M in der kreisförmigen Verbindungsfläche (25) des Seilspeicherelements (2) mit einem Radius R2 ausgebildet ist, während Magnete (30, 31, 32, 33, 34, 35) mit einem Durchmesser D3 auf der Verbindungsfläche (25) fixiert sind,
wobei sich die Mitten K der Magnete (30, 31, 32, 33, 34, 35) auf einem kreisförmigen Bogen mit einem Radius R1 befinden, und wobei sich ferner die Mitte K eines ersten Magneten (30) auf einer Achse t1 befindet, sich die Mitte K eines zweiten Magneten (31) auf einer Achse t2 befindet, sich die Mitte K eines dritten Magneten (32) auf einer Achse t3 befindet, sich die Mitte K eines vierten Magneten (33) auf einer Achse t12 befindet, sich die Mitte K eines fünften Magneten (34) auf einer Achse t13 befindet, sich die Mitte K eines sechsten Magneten (35) auf einer Achse t11 befindet, so dass die Achsen t1 und t11 fluchten, die Achsen t2 und t12 fluchten, die Achsen t3 und t13 fluchten, während ein Winkel α zwischen den Achsen t1 und t2, zwischen den Achsen t2 und t3, zwischen den Achsen t11 und t12, zwischen den Achsen t2 und t13 vorhanden ist, und ferner die Achse t2 senkrecht zur Achse t4 steht, während ein Winkel β zwischen den Achsen t14 und t1, zwischen den Achsen t4 und t3, zwischen den Achsen t4 und t11, zwischen den Achsen t4 und t13 vorhanden ist, wobei der Winkel α kleiner als der Winkel β ist,
während sich die Anzeigerippe (8) mit der Achse t5 und der Magnet (30) mit der Mitte K in der Ebene befinden, die durch die Achse t1 und die Achse t5 bestimmt ist, und wobei
eine erste Stärkeanzeigerippe (22) mit einer Achse t22 und eine zweite Stärkeanzeigerippe (23) mit einer Achse t23 vorhanden sind, und eine dritte Stärkeanzeigerippe (24) mit einer Achse t24 auf der zylindrischen Fläche (51) des Schnurführungselements (12) fixiert ist, und ein zylindrisches Verbindungselement (28) mit einem Durchmesser D2 und einer Höhe M auf der Verbindungsfläche (26) des Schnurführungselements (12) mit dem Radius R2 fixiert ist,
und wobei gegenüberliegende Polmagnete (40, 41, 42, 43, 44, 45) mit einem Durchmesser D3 auf der kreisförmigen Verbindungsfläche (26) des Schnurführungselements (12) mit dem Radius R1 fixiert sind, wobei sich die Mitten K der gegenüberliegenden Polmagnete (40, 41, 42, 43, 44, 45) auf einem kreisförmigen Bogen mit dem Radius R1 befinden und eine Mitte K eines ersten gegenüberliegenden Polmagneten (40) auf einer Achse t101 liegt, wobei eine Mitte K eines zweiten gegenüberliegenden Polmagneten (41) auf einer Achse t102 liegt, eine Mitte K eines dritten gegenüberliegenden Polmagneten (42) auf einer Achse t103 liegt, eine Mitte K eines vierten gegenüberliegenden Polmagneten (43) auf einer Achse t113 liegt, eine Mitte K eines fünften gegenüberliegenden Polmagneten (44) auf einer Achse t112 liegt, eine Mitte K eines sechsten gegenüberliegenden Polmagneten (45) auf einer Achse t111 liegt,
während die Achsen t101 und t111 fluchten, die Achsen t102 und t112 fluchten, die Achsen t103 und t113 fluchten, wobei ein Winkel α zwischen den Achsen t101 und t102, zwischen den Achsen t102 und t103, zwischen den Achsen t111 und t112, zwischen den Achsen t112 und t113 vorhanden ist, während die Achse t102 senkrecht zur Achse t104 steht,
während ein Winkel β zwischen den Achsen t104 und t101, zwischen den Achsen t104 und t103, zwischen den Achsen t104 und t111, zwischen den Achsen t104 und t113 vorhanden ist, wobei der Winkel α kleiner als der Winkel β ist,
und wobei sich ferner die erste Stärkeanzeigerippe (22) mit der Achse t22 und der dritte gegenüberliegende Polmagnet (42) mit der Mitte K in der Ebene befinden, die durch die Achse t22 und die Achse t103 bestimmt ist, wobei sich die zweite Stärkeanzeigerippe (23) mit der Achse t23 und der zweite gegenüberliegende Polmagnet (41) mit der Mitte K in der Ebene befinden, die durch die Achse t23 und die Achse t102 bestimmt ist,
wobei sich die dritte Stärkeanzeigerippe (24) mit der Achse t24 und der erste gegenüberliegende Polmagnet (40) mit der Mitte K in der Ebene befinden, die durch die Achse t24 und die Achse t101 definiert ist.

3. Magnetische Auslösevorrichtung nach einem der Ansprüche 1-2, **dadurch gekennzeichnet, dass** Nuten (11, 21) neben der knotenfreien Klemme (20) an dem oberen Ende (50) des Grundkörpers (3) ausgebildet sind.

4. Magnetische Auslösevorrichtung nach einem der Ansprüche 1-3, **dadurch gekennzeichnet, dass** Längsnuten (5) mit einer Aussparung (18) in den Haltelaschen (4, 14) ausgebildet sind und Leuchtkartuschen (6) in den Längsnuten (5) platziert sind.

5. Magnetische Auslösevorrichtung nach einem der Ansprüche 1-4, **dadurch gekennzeichnet, dass** eine reflektierende Fläche (9) an dem zylindrischen Ende (13) des Seilspeicherelements (2) fixiert ist.

6. Magnetische Auslösevorrichtung nach einem der Ansprüche 1-5, **dadurch gekennzeichnet, dass** das Seil (10) auf eine der Spulen (7) des Seilspeicherelements (2) und auf dessen knotenfreien Klemme (20) gewickelt ist.

7. Magnetische Auslösevorrichtung nach einem der Ansprüche 1-6, **dadurch gekennzeichnet, dass** Längsnuten (5) mit jeweils zwei Aussparungen (18) in der zylindrischen Fläche (51) des Schnurführungselements (12) ausgebildet sind und Leuchtkartuschen (6) in den Längsnuten (5) platziert sind.

8. Magnetische Auslösevorrichtung nach einem der Ansprüche 1-7, **dadurch gekennzeichnet, dass** eine reflektierende Fläche (19) an der zylindrischen Fläche (51) des Schnurführungselements (12) fixiert ist.

## Revendications

1. Dispositif de déclenchement magnétique (1) pour ligne de pêche pré-tendue, qui comprend :
un élément de stockage de câble (2) formé avec un corps de base (3), une extrémité cylindrique (13) et une surface de raccordement (25), ainsi qu'un élément de guidage de ligne (12) en forme de cône tronqué, formé avec une surface de fixation (47), une surface cylindrique (51) et une surface de raccordement (26), et des bobines (7, 17) sont raccordées à des surfaces latérales (48, 49) du corps de base (3) de l'élément de stockage de câble (2) ; dans lequel
des pattes de support (4, 14) sont raccordées aux bobines (7, 17), alors qu'une attache sans noeud (20) est fixée au corps de base (3) à une extrémité supérieure (50) du corps de base (3),
**caractérisé en ce qu'**un aimant (130) est situé au centre de la surface de raccordement circulaire (25) de l'élément de stockage de câble (2),
et une attache rotative (16) pour guider la ligne de pêche est fixée au centre de la surface de fixation (47) de l'élément de guidage de ligne (12),
alors qu'un contre-aimant (140) est situé au centre de la surface de raccordement circulaire (26) de l'élément de guidage de ligne (12).

2. Dispositif de déclenchement magnétique selon la revendication 1, **caractérisé en ce qu'**une nervure indicatrice (8) est attachée au corps de base (3) avec un axe t5, et une rainure circulaire (27) avec un diamètre D1 et une profondeur M est formée dans la surface de raccordement circulaire (25) de l'élément de stockage de câble (2) avec un rayon R2, alors que des aimants (30, 31, 32, 33, 34, 35) ayant un diamètre D3 sont fixés sur la surface de raccordement (25),
les centres K de ces aimants (30, 31, 32, 33, 34, 35) sont situés sur une arche circulaire avec un rayon R1, et en outre, le centre K d'un premier aimant (30) est situé sur un axe t1, le centre K d'un deuxième aimant (31) est situé sur un axe t2, le centre K d'un troisième aimant (32) est situé sur un axe t3, le centre K d'un quatrième aimant (33) est situé sur un axe t12, le centre K d'un cinquième aimant (34) est situé sur un axe t13, le centre K d'un sixième aimant (35) est situé sur un axe t11, pour que les axes t1 et t11 soient alignés, les axes t2 et t12 soient alignés, les axes t3 et t13 soient alignés, alors qu'il y a un angle α entre les axes t1 et t2, entre les axes t2 et t3, entre les axes t11 et t12, entre les axes t2 et t13, et en outre, l'axe t2 est perpendiculaire à l'axe t4, alors qu'il y a un angle β entre les axes t14 et t1, entre les axes t4 et t3, entre les axes t4 et t11, entre les axes t4 et t13, où angle α est inférieur à l'angle β,
alors que la nervure indicatrice (8) avec un axe t5 et l'aimant (30) ayant un centre K sont dans le plan déterminé par l'axe t1 et l'axe t5,
et dans lequel il y a une première nervure indicatrice de résistance (22) avec un axe t22, et une deuxième nervure indicatrice de résistance (23) avec un axe t23, et une troisième nervure indicatrice de résistance (24) avec un axe t24 fixées sur la surface cylindrique (51) de l'élément de guidage de ligne (12), et un élément de raccordement cylindrique (28) ayant un diamètre D2 et une hauteur M est fixé sur la surface de raccordement (26) de l'élément de guidage de ligne (12) ayant un rayon R2,
et des aimants de pôles opposés (40, 41, 42, 43, 44, 45) ayant un diamètre D3 sont fixés sur la surface de raccordement circulaire (26) de l'élément de guidage de ligne (12) ayant un rayon R1, les centres K de ces aimants de pôles opposés (40, 41, 42, 43, 44, 45) sont situés sur une arche circulaire ayant un rayon R1, et le centre K d'un premier aimant de pôle opposé (40) est sur un axe t101, le centre K d'un deuxième aimant de pôle opposé (41) est sur un axe t102, le centre K d'un troisième aimant de pôle opposé (42) est sur un axe t103, le centre K d'un quatrième aimant de pôle opposé (43) est sur un axe t113, le centre K d'un cinquième aimant de pôle opposé (44) est sur un axe t112, le centre K d'un sixième aimant de pôle opposé (45) est sur un axe t111,
alors que les axes t101 et t111 sont alignés, les axes t102 et t112 sont alignés, les axes t103 et t113 sont alignés, où il y a un angle α entre les axes t101 et t102, entre les axes t102 et t103, entre les axes t111 et t112, entre les axes t112 et t113, alors que l'axe t102 est perpendiculaire à l'axe t104,
alors qu'il y a un angle β entre les axes t104 et t101, entre les axes t104 et t103, entre les axes t104 et t111, entre les axes t104 et t113, où l'angle α est inférieur à l'angle β,
et en outre, la première nervure indicatrice de résistance (22) avec un axe t22 et le troisième aimant de pôle opposé (42) ayant un centre K sont situés dans le plan déterminé par l'axe t22 et l'axe t103,
la deuxième nervure indicatrice de résistance (23) avec un axe t23 et le deuxième aimant de pôle opposé (41) ayant un centre K sont situés dans le plan déterminé par l'axe t23 et l'axe t102,
la troisième nervure indicatrice de résistance (24) avec un axe t24 et le premier aimant de pôle opposé (40) ayant un centre K sont situés dans le plan déterminé par l'axe t24 et l'axe t101.

3. Dispositif de déclenchement magnétique selon l'une quelconque des revendications 1 et 2, **caractérisé en ce que** des rainures (11, 21) sont formées à côté de l'attache sans noeud (20) à l'extrémité supérieure (50) du corps de base (3).

4. Dispositif de déclenchement magnétique selon l'une quelconque des revendications 1 à 3, **caractérisé en ce que** des rainures longitudinales (5) avec un évidement (18) sont formées dans les pattes de support (4, 14), et des cartouches d'éclairage (6) sont placées dans les rainures longitudinales (5).

5. Dispositif de déclenchement magnétique selon l'une quelconque des revendications 1 à 4, **caractérisé en ce qu'**une surface réfléchissante (9) est fixée à l'extrémité cylindrique (13) de l'élément de stockage de câble (2).

6. Dispositif de déclenchement magnétique selon l'une quelconque des revendications 1 à 5, **caractérisé en ce qu'**un câble (10) est enroulé sur une des bobines (7) de l'élément de stockage de câble (2) et sur son attache sans noeud (20).

7. Dispositif de déclenchement magnétique selon l'une quelconque des revendications 1 à 6, **caractérisé en ce que** des rainures longitudinales (5) chacune avec deux évidements (18) sont formées dans la surface cylindrique (51) de l'élément de guidage de ligne (12), et des cartouches d'éclairage (6) sont placées dans les rainures longitudinales (5).

8. Dispositif de déclenchement magnétique selon l'une quelconque des revendications 1 à 7, **caractérisé en ce qu'**une surface réfléchissante (19) est fixée à la surface cylindrique (51) de l'élément de guidage de ligne (12).
